(19) Europäisches Patentamt
European Patent Office
Office européen des brevets

(11) EP 0 616 667 B1

(12) EUROPEAN PATENT SPECIFICATION

(45) Date of publication and mention
of the grant of the patent:
**17.01.1996 Bulletin 1996/03**

(51) Int Cl.$^6$: **F16D 65/12**, F16D 55/22,
C22C 29/02, C09K 3/14

(21) Application number: 92925111.4

(22) Date of filing: **06.11.1992**

(86) International application number:
**PCT/US92/09608**

(87) International publication number:
**WO 93/12359 (24.06.1993 Gazette 1993/15)**

(54) **LIGHTWEIGHT AND HIGH THERMAL CONDUCTIVITY BRAKE ROTOR**

BREMSROTOR MIT LEICHTEM GEWICHT UND HOHER WÄRMELEITUNGSFÄHIGKEIT

ROTOR DE FREIN LEGER ET A HAUTE CONDUCTIVITE THERMIQUE

(84) Designated Contracting States:
**DE FR GB**

(30) Priority: **17.12.1991 US 809719**

(43) Date of publication of application:
**28.09.1994 Bulletin 1994/39**

(73) Proprietor: **AlliedSignal Inc.**
**Morristown, New Jersey 07962-2245 (US)**

(72) Inventors:
• **LIBSCH, Thomas, Alan**
**Novi, MI 48375 (US)**
• **RHEE, Seong, Kwan**
**Northville, MI 48167 (US)**

(74) Representative: **Brock, Peter William et al**
**Reading RG1 8EQ, Berkshire (GB)**

(56) References cited:
EP-A- 0 351 237          GB-A- 992 210
US-A- 4 749 545          US-A- 4 821 848

• **Derwent's abstract, No 92-320 237/39, week
9239, ABSTRACT OF JP 4 224 883,
(MITSUBISHI MATERIAL CORP.), 14 August
1992**

## Description

This invention relates to a brake rotor made from composites of from 15-80 percent by volume of silicon carbide and from 85-20 percent by volume of iron alloy. The silicon carbide in the composite imparts a high thermal conductivity characteristic to carry away thermal energy generated between first and second friction surfaces and brake pads located in a caliper during a brake application.

In an effort to increase the overall fuel efficiency for a vehicle, the overall weight of the vehicle has been decreasing for a period of time. One of the ways that the weight can be reduced is to replace the cast iron brake rotor with a brake rotor made from an aluminum or other light weight metal. Unfortunately, aluminum is not normally resistant to abrasion. As a result, when aluminum is used, a wear resistant surface coating of the type disclosed in U.S. Patent 4,290,510 must be applied to the friction engagement surfaces. This type of protection for aluminum rotors is adequate for some applications as long as the thermal energy generated during a brake application is below 900°F or 480°C. However, in many instances, the thermal energy generated exceeds the melting point of aluminum and as a result the rotors become soft. Therefore it is imperative to develop a rotor having the capability of conducting thermal energy from a wear surface while maintaining good mechanical properties such as hardness and strength at high temperatures during a brake application.

A rotor made from a chromium copper alloy has exhibited a thermal conductivity of approximately six times greater than cast iron and has exhibited satisfactory performance. Unfortunately, the density of such chromium copper rotors is also more than corresponding cast iron rotors and as a result an increase in the overall weight of a vehicle would not improve the fuel efficiency as desired.

After evaluating many compositions, silicon carbide-copper alloy composites as disclosed in copending U.S. Patent Application 722,043 filed June 27, 1991, were developed for use as a brake rotor. Such silicon carbide-copper alloy composite rotors, which have a thermal conductivity about one and one-half times cast iron and a relative density approximately two-thirds of cast iron, would perform in an adequate manner for most brake applications.

Since cost of materials is an important consideration in the manufacture of a brake rotor, we have discovered that an iron alloy/silicon carbide metal matrix composite also has a higher thermal conductivity and greater overall strength at higher temperatures than gray cast iron with an overall weight reduction that exceeds silicon carbide-copper alloy composites. We have now developed a metal alloy metal matrix composite with a composition being selected from 15-80 percent by volume of silicon carbide and from 85-20 percent by volume of iron alloy. Silicon carbide powder is packed in a mold and iron alloy is infiltrated into the packed volume of silicon carbide to form a unitary brake rotor. The brake rotors has a hub with a plurality of openings therein for attachment to an axle of a vehicle which rotates with a wheel and spokes or a solid disc which radially extending from said hub to an annular head portion. The head portion has first and second friction surfaces thereon for engagement with brake pads during a brake actuation. The brake rotor has a density of 4.0 to 6.4 $g/cm^3$ and a resultant thermal conductivity up to 171 W/mK.

It is an object of this invention to provide compositions of silicon carbide and iron alloy for use in a brake rotor.

It is a further object of this invention to provide high thermal conductivity and relative light weight compositions for use in a brake rotor to withstand the generation of thermal energy during a brake application without degradation.

It is a still further object of this invention to provide a composite for use in a brake rotor having a silicon carbide and iron alloy composition with a density of approximately seventy percent of cast iron but with a greater thermal conductivity to maintain the effectiveness of a brake system over a wider range of operation.

These objects and advantages should be apparent from reading this application while viewing the drawings wherein:

Figure 1 is a schematic illustration of a brake system wherein a rotor made according to this invention is located between friction pads carried by a caliper;

Figure 2 is a side view of the rotor of Figure 1; and

Figure 3 is a table illustrating physical and thermal characteristics of various composites for the rotor of Figure 1.

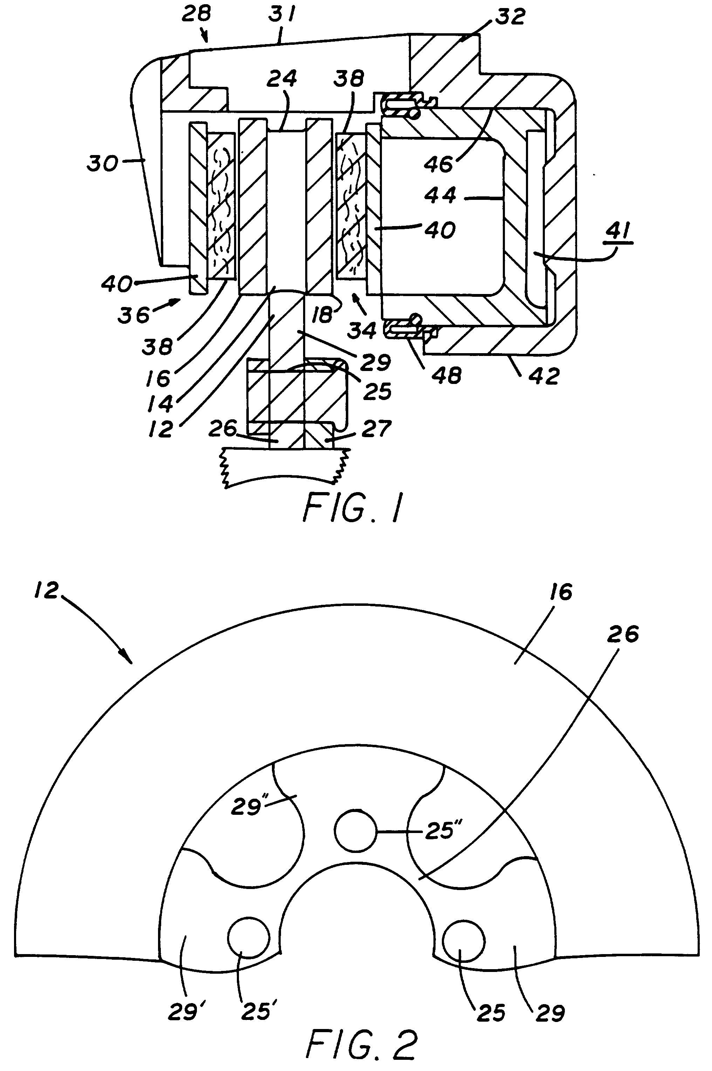

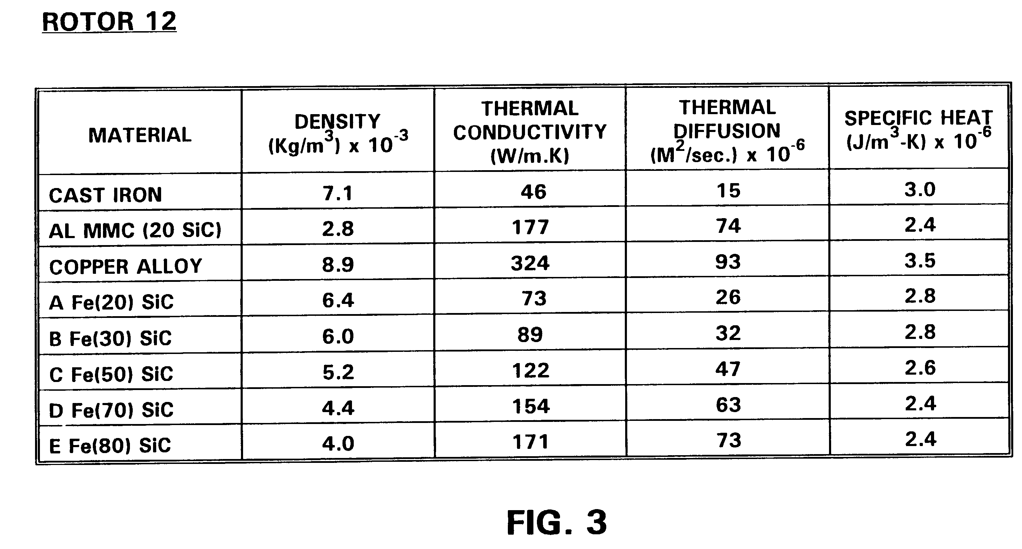

In the brake system shown in Figure 1 for a wheel of a vehicle, a caliper 10 retains brake pads 34 and 36 for engagement with a rotor 12 made from an alloy selected from a composition shown in Figure 3.

Rotor 12 has a hub 26 with a plurality of openings 25, 25'...$25^n$ located therein for attachment to an axle 27 of a vehicle. The rotor 12 rotates with a wheel and may have spokes 29, 29'...$29^n$ which radially extending from said hub to the annular head portion 14 or a solid central disc that connects the hub 26 with the annular head portion 14. However, the spokes 29, 29' ...$29^n$ may be preferred due to a greater potential to dissipate heat into the surrounding environment. The head portion 14 has a pair of friction faces 16 and 18 formed thereon which are connected together by a plurality of webs 24 having radially extending spaced therebetween. The webs 24 hold the engaging faces 16 and 18 parallel while the spaces therebetween allow the flow of cooling air between the webs to promote cooling of the rotor 12. In addition the space between the spokes 29, 29'...29ⁿ allows a certain amount of air flow to also cool the rotor 12.

A caliper 28 is located on the vehicle and has a pair of legs 30 and 32 which are located in a spaced parallel relationship with faces 16 and 18 on rotor 12. Brake pads 34 and 36 which include a friction lining 38 and a backing plate 40, are positioned on caliper 28 to axially move in a direction generally perpendicular to the planar rotation of the rotor 12 in response to hydraulic fluid being supplied to chamber 41 of fluid motor 42.

The fluid motor 42 is carried by leg 32 of caliper 28 and includes a piston 44 located in cylinder bore 46. A flexible boot or seal 48 has one end fixed to the caliper and the other end fixed to piston 44 to seal chamber 41 and prevent dirt, water and other contaminants from entering bore 46.

During a brake application, hydraulic fluid is supplied to chamber 41 to move piston 44 and brake pad 34 toward face 18 on rotor 12 while at the same time leg 32 acts through web 31 and leg 30 to pull brake pad 36 toward face 16 on rotor 12. As the friction material 38 of brake pads 34 and 36 engage friction faces 16 and 18 thermal energy is generated. At temperatures below 400°F or 205°C the wear rate of the friction material is primarily controlled by the selection of friction modifiers in the friction material while at temperatures above 400°F or 205 °C the wear rate increases exponentially with increasing temperature due to thermal degradation of the binder in the friction material. Thus, it is important that thermal energy generated during braking be conducted away from the friction material as quickly as possible.

Various iron alloy materials from which rotors 12 may be manufactured and their particular characteristics are identified in Figure 3.

From experimentation it has been determined that a typical rotor 12 made from gray cast iron weighs about 12 pounds or approximately 5.5 Kg. A rotor of this type could be expected to conduct 46 W/mK of thermal energy away from the friction pads 34 and 36 at a rate of 15 M2/sec x $10^{-6}$. As long as the temperature generated during a brake application is below 1600°F or 870°C this type of rotor performs in a satisfactory manner.

In order to reduce the overall weight of a vehicle, it has been suggested to replace the cast iron in a rotor with an aluminum metal matrix composite which includes 20 volume percent of silicon carbide. A rotor 12 made from this composition would have a weight of approximately 4.6 pounds or 2.1 Kg. Thus it is easy to demonstrate that the use of an aluminum alloy composition provides a considerable reduction in weight for a rotor. In addition, theoretically the conductivity of thermal energy of such a rotor would increase about three and one-half times resulting in an approximate five fold rate of diffusion away from the friction material. As long as the thermal energy generated during a brake application is below 900°F or 480°C, a rotor made from this type aluminum composition performs in a satisfactory manner. Unfortunately in meeting the current standard for braking established by the United States Department of Transportation, the thermal energy generated most likely will exceed 900°F or 480°C which will result in a degradation of the brake lining and braking surfaces on aluminum composite rotors. Thus, a need exists to increase the thermal capability of the brake rotor.

A brake rotor 12 was made from a chromium copper alloy as disclosed in U.S. Patent Application 722,043. Theoretically, a rotor made from such a chromium copper alloy has approximately a six times rate of thermal conductivity and rate of diffusion as compared to a similar cast iron rotor. Unfortunately the weight of such a rotor would increase to approximately 15.2 pounds or 6.9 Kg and as a result there would be increase in the overall weight of a vehicle. However, the improvement in the thermal characteristics of the chromium copper alloy was used as a basis in the development of an iron alloy material for use as a brake rotor in the present invention.

As used in this specification the term iron alloy shall mean a material which possesses the following ingredients:

| Ranges | Actual |
|---|---|
| TC: up to 4.0 % by weight | ( 3.38); |
| Si: up to 18.0 % by weight | ( 2.05); |
| X: up to 10.0 % by weight | ( 1.51); and |
| Fe: Balance of mixture | ( 93.06) |
| Total | 100.00 |

where X is an alloying modifier selected from a group consisting of Cr (0.13), Mo (0.08), Cu (0.28), Mn (0.75), Ni (0.13), P (0.06) and S (0.08).

Iron alloy was substituted for the chromium copper alloy because of the high strength which the iron alloy possesses at temperatures over 1560°F or 850°C, a lower density and a lower material cost. The following specific compositions identified in Figure 3 as A, B, C, D and E were developed to evaluate a range of the use for the iron alloy in a brake rotor.

A brake rotor 12 made from composition A having about 20% by volume of silicon carbide and 80% by volume of iron alloy would have a weight of approximately 10.8 pounds or 4.9 Kg which is about 11% less than a gray cast iron rotor. A rotor 12 made from composition A also has an improvement in both the conductivity and rate of thermal diffusion as shown in Figure 3.

A brake rotor 12 made from composition B having about 30% by volume of silicon carbide and 70% by volume of iron alloy would have a weight of approximately 10.0 pounds or 4.6 Kg which is about 17% less than a gray cast iron rotor. A rotor 12 made from composition B also has an improvement in both conductivity and rate of thermal diffusion as shown in Figure 3.

A brake rotor 12 made from composition C having about 50% by volume of silicon carbide and 50% by volume of iron alloy would have a weight of approximately 8.6 pounds or 3.9 Kg which is about 28% less than a gray cast iron rotor. A rotor 12 made from composition C also has an improvement in both conductivity and rate of thermal diffusion as shown in Figure 3.

A brake rotor 12 made from composition D having about 70% by volume of silicon carbide and 30% by volume of iron alloy would have a weight of approximately 7.3 pounds or 3.3 Kg which is about 39% less than a gray cast iron rotor. A rotor 12 made from composition D also has an improvement in both conductivity and rate of thermal diffusion as shown in Figure 3.

A brake rotor 12 made from composition E having about 80% by volume of silicon carbide and 20% by volume of iron alloy would have a weight of approximately 6.7 pounds or 3.1 Kg which is about 44% less than a gray cast iron rotor. A rotor 12 made from composition E also has an improvement in both conductivity and rate of thermal diffusion as shown in Figure 3.

During the manufacture of a rotor 12 from composition A, B, C, D or E, silicon carbide powder located in a mold was infiltrated by molten iron alloy at approximately 2190-2730°F or 1200-1500°C. This temperature which is below the melting point of silicon carbide is sufficient to cause the iron alloy to flow and create an interconnected matrix for a resulting rotor 12.

## Claims

1. A rotor for use with a caliper braking means comprising:

   a hub having a plurality of openings therein for attachment to an axle of a vehicle, said hub rotating with a wheel on said vehicle;
   spokes radially extending from said hub; and
   an annular head portion attached to said spokes, said head portion having first and second friction surfaces thereon for engagement with brake pads on actuation of said caliper to effect a brake application, said rotor being made from a composition having from 15-80 percent by volume of silicon carbide and 85-20 percent by volume of an iron alloy, said composition having a thermal conductivity up to 171 W/mK.

2. The rotor as recited in claim 1 wherein said composition comprises 70 percent by volume of silicon carbide and 30 volume percent of iron alloy to produce a density of 4.4 g/cm$^3$.

3. The rotor as recited in claim 2 wherein said iron alloy forms a matrix for uniformly conducting thermal energy away from said first and second friction surfaces on engagement with said brake pads.

4. The rotor as recited in claim 1 wherein said composition comprises 85 percent by volume of silicon carbide and 15 volume percent of iron alloy to produce a density of 4.0 g/cm$^3$.

5. A rotor for use with a caliper braking means comprising:

   a hub having a plurality of openings therein for attachment to an axle of a vehicle to rotate with a wheel;
   an annular disc radially extending from said hub; and
   an annular head portion attached to said annular disc, said head portion having first and second friction surfaces thereon for engagement with brake pads on actuation of said caliper to effect a brake application, said rotor being made from a composition having from 15-80 percent by volume of silicon carbide and 85-20 percent by volume of iron alloy, said composition having a thermal conductivity up to 171 W/mK to produce a density of 4.0 to 6.4 (Kg/m3) x 10$^{-3}$. .

6. The rotor as recited in claim 5 wherein said iron alloy forms a matrix for uniformly conducting thermal energy away from said first and second friction surfaces on engagement with said brake pads.

7. The rotor as recited in claim 6 wherein said thermal energy from said head is communicated into said annular disc for dissipation into the surrounding environment.

**Patentansprüche**

1.  Rotor zur Verwendung bei einer Sattelbremseinrichtung, bestehend aus:

    einer Nabe mit mehreren darin befindlichen Öffnungen zur Befestigung an einer Fahrzeugachse, wobei die Nabe sich zusammen mit einem an diesem Fahrzeug befindlichen Rad dreht,
    Speichen, die von der Nabe radial ausgehen, sowie
    einem ringförmigen Kopfteil, der an diesen Speichen befestigt ist, wobei das Kopfteil erste und zweite darauf befindliche Reibflächen aufweist, die bei Betätigung des Sattels die Bremsbeläge kontaktieren, wodurch eine Bremswirkung zustande kommt, wobei der Rotor aus einer Zusammensetzung aus 15-80 Vol.-% Siliciumcarbid und 85-20 Vol.-% einer Eisenlegierung gefertigt ist und wobei die Zusammensetzung eine Wärmeleitfähigkeit von bis zu 171 W/mK besitzt.

2.  Rotor nach Anspruch 1, wobei die Zusammensetzung aus 70 Vol.-% Siliciumcarbid und 30 Vol.-% Eisenlegierung besteht, wodurch sich eine Dichte von 4,4 g/cm$^3$ ergibt.

3.  Rotor nach Anspruch 2, wobei die Eisenlegierung zwecks gleichmäßiger Ableitung der thermischen Energie von den ersten und zweiten Reibflächen beim Kontaktieren der Bremsbeläge eine Matrix bildet.

4.  Rotor nach Anspruch 1, wobei die Zusammensetzung aus 85 Vol.-% Siliciumcarbid und 15 Vol.-% Eisenlegierung besteht, wodurch sich eine Dichte von 4,0 g/cm$^3$ ergibt.

5.  Rotor zur Verwendung bei einer Sattelbremseinrichtung, bestehend aus:

    einer Nabe mit mehreren darin befindlichen Öffnungen zur Befestigung an einer Fahrzeugachse, um sich zusammen mit einem Rad zu drehen,
    einer ringförmigen Scheibe, die von dieser Nabe radial ausgeht, sowie
    einem ringförmigen Kopfteil, der an der ringförmigen Scheibe befestigt ist, wobei das Kopfteil erste und zweite darauf befindliche Reibflächen aufweist, die bei Betätigung des Sattels die Bremsbeläge kontaktieren, wodurch eine Bremswirkung zustande kommt, wobei der Rotor aus einer Zusammensetzung aus 15-80 Vol.-% Siliciumcarbid und 85-20 Vol.-% Eisenlegierung gefertigt ist und wobei die Zusammensetzung eine Wärmeleitfähigkeit von bis zu 171 W/mK besitzt, wodurch sich eine Dichte von 4,0 bis 6,4 (kg/m$^3$) x 10$^{-3}$ ergibt.

6.  Rotor nach Anspruch 5, wobei die Eisenlegierung zwecks gleichmäßiger Ableitung der thermischen Energie von den ersten und zweiten Reibflächen beim Kontaktieren der Bremsbeläge eine Matrix bildet.

7.  Rotor nach Anspruch 6, wobei die von dem Kopf stammende thermische Energie zwecks Ableitung in die Umgebung zu der ringförmigen Scheibe weitergeleitet wird.

**Revendications**

1.  Un rotor pour utilisation avec un moyen de freinage à étrier comprenant:

    un moyeu ayant une pluralité d'ouvertures en son sein pour l'attache à un essieu d'un véhicule, ledit moyeu tournant avec une roue sur ledit véhicule;
    des rayons s'étendant de manière radiale dudit moyeu; et
    une portion de tête annulaire attachée auxdits rayons, ladite portion de tête ayant une première surface de friction et une deuxième surface de friction, qui y sont prévues, pour l'engagement avec des patins de frein à la suite de l'actionnement dudit étrier pour effectuer une application du frein, ledit rotor étant fabriqué à partir d'une composition ayant 15-80 pour cent en volume de carbure de silicium et 85-20 pour cent en volume d'un alliage de fer, ladite composition ayant une conductibilité thermique allant jusqu'à 171 W/mK.

2.  Le rotor comme décrit dans la revendication 1, caractérisé en ce que ladite composition comprend 70 pour cent en volume de carbure de silicium et 30 pour cent en volume d'alliage de fer pour produire une densité de 4,4 g/cm$^3$.

**3.** Le rotor comme décrit dans la revendication 2, caractérisé en ce que ledit alliage de fer forme une matrice destinée à conduire l'énergie thermique de manière uniforme à l'écart desdites première et deuxième surfaces de friction lors de l'engagement avec lesdits patins de frein.

**4.** Le rotor comme décrit dans la revendication 1, caractérisé en ce que la composition comprend 85 pour cent en volume de carbure de silicium et 15 pour cent en volume d'alliage de fer pour produire une densité de 4,0 g/cm$^3$.

**5.** Un rotor pour utilisation avec un moyen de freinage à étrier comprenant:

un moyeu ayant une pluralité d'ouvertures en son sein pour l'attache à un essieu d'un véhicule pour tourner avec une roue;
un disque annulaire s'étendant de manière radiale dudit moyeu; et
une portion de tête annulaire attachée audit disque annulaire, ladite portion de tête ayant une première surface de friction et une deuxième surface de friction, qui y sont prévues, pour l'engagement avec des patins de frein à la suite de l'actionnement dudit étrier pour effectuer une application du frein, ledit rotor étant fabriqué à partir d'une composition ayant 15-80 pour cent en volume de carbure de silicium et 85-20 pour cent en volume d'un alliage de fer, ladite composition ayant une conductibilité thermique allant jusqu'à 171 W/mK pour produire une densité de 4,0 à 6,4 (Kg/m3) [sic] $\times$ 10$^{-3}$.

**6.** Le rotor comme décrit dans la revendication 5, caractérisé en ce que ledit alliage de fer forme une matrice destinée à conduire l'énergie thermique de manière uniforme à l'écart desdites première et deuxième surfaces de friction lors de l'engagement avec lesdits patins de frein.

**7.** Le rotor comme décrit dans la revendication 6, caractérisé en ce que ladite énergie thermique en provenance de ladite tête est communiquée audit disque annulaire en vue de la dissipation dans le milieu environnant.

EP 0 616 667 B1

FIG. 1

FIG. 2

## ROTOR 12

| MATERIAL | DENSITY $(Kg/m^3) \times 10^{-3}$ | THERMAL CONDUCTIVITY (W/m.K) | THERMAL DIFFUSION $(M^2/sec.) \times 10^{-6}$ | SPECIFIC HEAT $(J/m^3-K) \times 10^{-6}$ |
|---|---|---|---|---|
| CAST IRON | 7.1 | 46 | 15 | 3.0 |
| AL MMC (20 SiC) | 2.8 | 177 | 74 | 2.4 |
| COPPER ALLOY | 8.9 | 324 | 93 | 3.5 |
| A Fe(20) SiC | 6.4 | 73 | 26 | 2.8 |
| B Fe(30) SiC | 6.0 | 89 | 32 | 2.8 |
| C Fe(50) SiC | 5.2 | 122 | 47 | 2.6 |
| D Fe(70) SiC | 4.4 | 154 | 63 | 2.4 |
| E Fe(80) SiC | 4.0 | 171 | 73 | 2.4 |

# FIG. 3

EP 0 616 667 B1